# EUROPEAN PATENT SPECIFICATION

(11) **EP 2 481 646 B1**
(45) Date of publication and mention of the grant of the patent: **10.04.2013**
(21) Application number: 12151896.3
(22) Date of filing: 20.01.2012
(51) Int. Cl.: B60R 21/34

(54) **Hood lock device**
Haubenverschlussvorrichtung
Dispositif de verrouillage pour capot

(30) Priority: 31.01.2011 JP 2011017673
(43) Date of publication of application: 01.08.2012
(73) Proprietor: Honda Motor Co., Ltd., Tokyo 107-8556 (JP)
(72) Inventor: Gunji, Yasuaki, Saitama, 351-0193 (JP)
(74) Representative: Feller, Frank

(56) References cited:
- EP-A1- 1 506 907
- DE-A1-102006 046 817
- US-A1- 2005 253 419

## Description

### BACKGROUND OF THE INVENTION

### FIELD OF THE INVENTION

The present invention relates to a hood lock device in which a striker provided in a protruding manner downward from a front portion of a front hood is locked with a lock device provided inside a frame member of a vehicle body, the front hood openably and closably covering an engine room.

### DESCRIPTION OF THE RELATED ART

At a collision of a front hood of an automobile with a pedestrian, if the front hood collapses in a large stroke to absorb collision energy, impact imposed on the pedestrian can be reduced. However, since a striker of the front hood is locked with a lock device, which is provided to a frame member such as a bulkhead, in order that the front hood be locked at a closed position, movement of the front hood is hindered by this portion. This causes a problem that a sufficient impact absorption stroke cannot be ensured.

Hence, the following hood lock device is publicly known by Japanese Patent Application Laid-open No. 2009-255635. Specifically, in the hood lock device, long holes extending in a front-rear direction are formed in brackets provided on a frame member of a vehicle body, and a base portion of the lock device is slidably fastened to the long holes with bolts. With this structure, an input of a collision load causes the base portion to slide rearward to ensure an impact absorption stroke.

In addition, the front hood receives the collision load not only from the front but also from the above. In this regard, the following structure is publicly known by Japanese Patent Application Laid-open No. 2009-57708. In the structure, long holes extending in an up-down direction are formed in brackets. With this structure, an input of a collision load causes a base portion to slide downward to ensure the impact absorption stroke. Document EP 1 506 907 A1 discloses a hood lock device according to the preamble of claim 1.

### SUMMARY OF THE INVENTION

Incidentally, the inventions described in Japanese Patent Application Laid-open Nos. 2009-255635 and 2009-57708 have a problem that a bolt tightening torque for fastening the base portion to the bracket is difficult to manage. Specifically, if the bolt tightening torque is too strong, the base portion might not be able to slide even when the collision load is inputted. On the other hand, if the bolt tightening torque is too weak, the base portion might move due to impact at the time of closing the front hood.

The present invention has been made in view of the aforementioned circumstances, and an object thereof is to ensure an impact absorption stroke at collision of a front portion of an automobile by moving a front portion of a front hood at a desirable load.

In order to achieve the object, according to the invention described in claim 1, there is provided a hood lock device in which a striker provided in a protruding manner downward from a front portion of a front hood is locked with a lock device provided inside a frame member of a vehicle body, the front hood openably and closably covering an engine room, **characterized in that** the frame member accommodating a base portion of the lock device is a member having a quadrangular closed cross section formed by joining a first member and a second member, the first member being formed of a thin plate having an L-shaped cross section including a front wall and an upper wall, the second member being formed of a thick plate having an L-shaped cross section including a rear wall and a lower wall, and an upper face of the base portion is fixed to the upper wall, and a first cut-out allowing a rear face of the base portion to pass therethrough is formed in the rear wall facing the rear face of the base portion.

According to the configuration of claim 1, when a collision load of a frontal collision imposed on the front hood is transmitted through the striker from the front or the above to the upper portion of the lock device provided inside the frame member, the upper wall of the thin-plate first member of the frame member to which the base portion of the lock device is fixed and the front wall continuous with the upper wall are deformed to allow the base portion to move rearward and downward. Thereby, an impact absorption stroke for absorbing collision energy is ensured. At this time, if the rear face of the base portion interferes with the rear wall of the thick-plate second member, the base portion is hindered from moving rearward. However, the rear face of the base portion passes through the first cut-out in the rear wall, and thereby a large rearward impact absorption stroke is ensured.

Further, according to the invention described in claim 2, in addition to the configuration of claim 1, there is provided the hood lock device, wherein a second cut-out allowing a lower face of the base portion to pass therethrough is formed in the lower wall in such a manner as to be continuous with the first cut-out, the lower wall facing the lower face of the base portion.

According to the configuration of claim 2, the second cut-out allowing the lower face of the base portion to pass therethrough is formed in the lower wall of the thick-plate second member in such a manner as to be continuous with the first cut-out, the lower wall facing the lower face of the base portion. Accordingly, when the thin-plate first member is deformed downward to allow the base portion to move downward, the lower face of the base portion does not interfere with the lower wall of the thick-plate second member, and thus the movement of the base portion is not hindered. A large downward impact absorption stroke of the base portion is thus ensured.

Further, according to the invention described in claim 3, in addition to the configuration of claim 1 or 2, there is provided the hood lock device, wherein the rear wall comprises paired slits extending upward along right and left side faces of the base portion from an upper edge of the first cut-out.

According to the configuration of claim 3, the rear wall of the thick-plate second member includes the paired slits extending upward along the right and left side faces of the base portion from the upper edge of the first cut-out. Thus, when the collision load is inputted to the base portion from the front hood through the striker, the rear wall made brittle due to the paired slits is bent, and thereby the base portion can be reliably moved rearward.

Further, according to the invention described in claim 4, in addition to the configuration of any one of claims 1 to 3, there is provided the hood lock device, wherein the rear face of the base portion is fixed to the rear wall.

According to the configuration of claim 4, the rear face of the base portion is fixed to the rear wall of the thick-plate second member of the frame member. Accordingly, it is possible to prevent downward movement of the base portion due to downward impact at the time of strongly closing the front hood.

Further, according to the invention described in claim 5, in addition to the configuration of claim 4, there is provided the hood lock device, wherein an opening for inserting the base portion therein is formed in the upper wall of the frame member.

According to the configuration of claim 5, the opening for inserting the base portion therein is formed in the upper wall of the frame member. Accordingly, when the collision load is inputted to the base portion from the front hood through the striker, the upper wall made brittle due to the opening is efficiently deformed, and thereby the base portion can be reliably moved rearward and downward.

The above and other objects, characteristics and advantages of the present invention will be clear from detailed descriptions of the preferred embodiment which will be provided below while referring to the attached drawings.

### BRIEF DESCRIPTION OF THE DRAWINGS

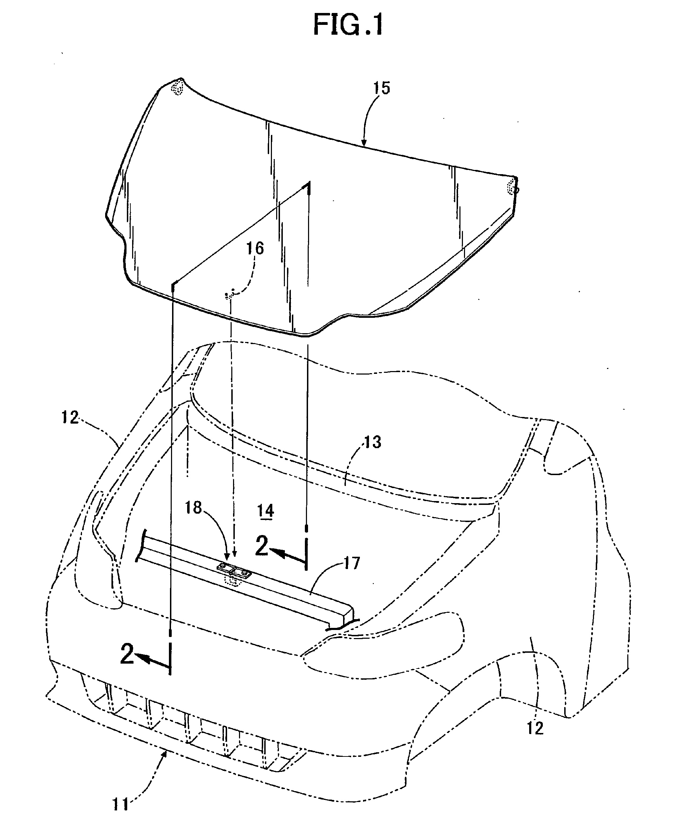

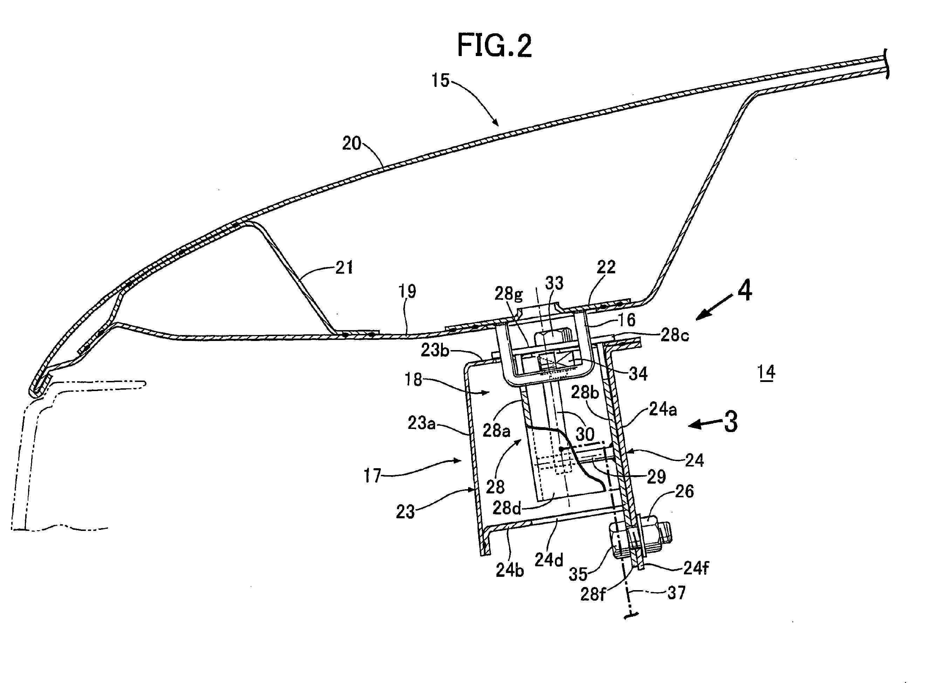

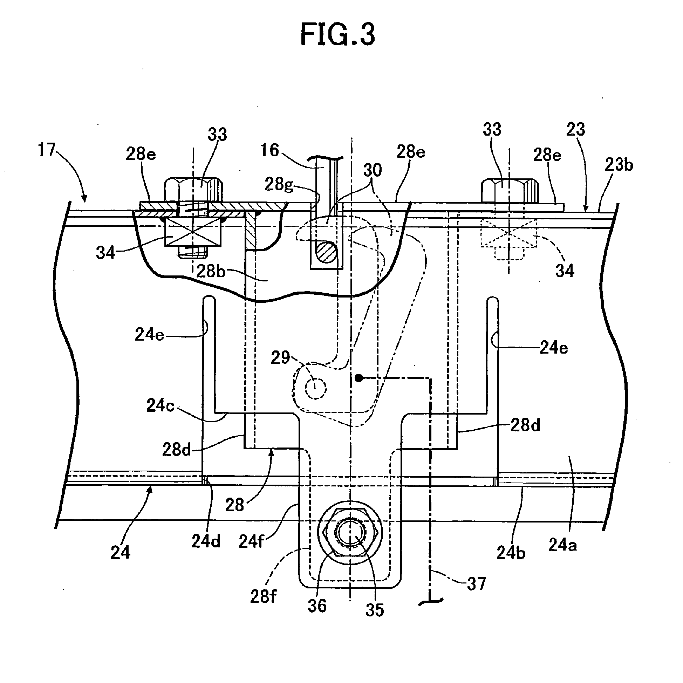

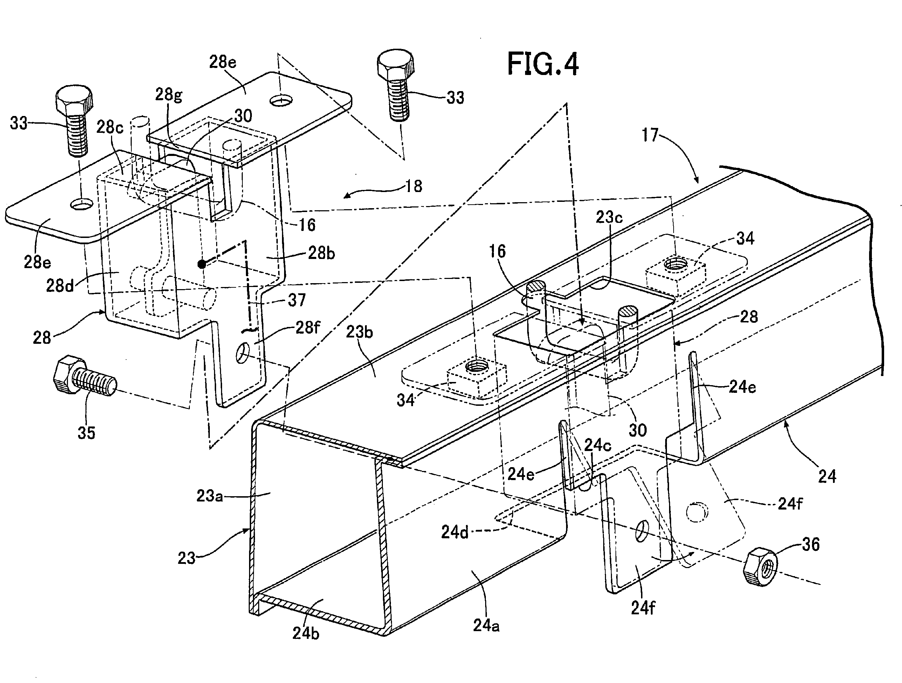

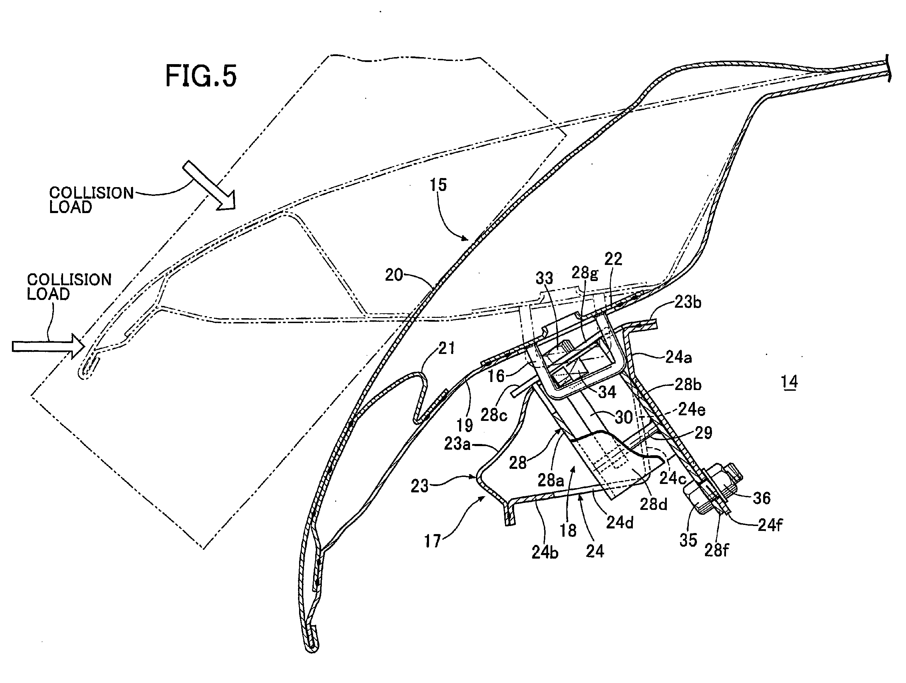

FIG. 1 is a perspective view of a front portion of a vehicle body of an automobile; FIG. 2 is a sectional view taken along a line 2-2 in FIG. 1; FIG. 3 is a view seen from a direction of an arrow 3 in FIG. 2; FIG. 4 is a view seen from a direction of an arrow 4 in FIG. 2; and FIG. 5 is an operation explanatory view at collision of a front part of the automobile.

### DESCRIPTION OF PREFERRED EMBODIMENT

Hereinbelow, a description is given of an embodiment of the present invention based on FIGS. 1 to 5. Here, in the specification, a front-rear direction and a right-left direction are defined with respect to an occupant sitting on a driver's seat.

As shown in FIG. 1, an engine room 14 surrounded by a front bumper 11, right and left front fenders 12, 12, and a dashboard 13 is openably and closably covered with a front hood 15. A U-shaped striker 16 is fixed on a lower surface of a front portion of the front hood 15. A lock device 18 is provided inside a bulkhead 17 which is a frame member arranged in the engine room 14 to extend in the right-left direction. The front hood 15 is locked at a closed position by locking the striker 16 with the lock device 18.

As shown in FIGS. 2 to 4, the front hood 15 is formed in such a manner that a hood skin 20 is overlapped with an upper surface of a hood frame 19 and is joined to the hood frame 19 at a peripheral edge portion thereof. A stiffener 21 is welded to an inner surface of a front portion of the front hood 15. A plate-shaped bracket 22 having the striker 16 fixed thereon is welded to the hood frame 19 behind the stiffener 21.

The bulkhead 17 is formed in a quadrangular closed cross section by welding a first member 23 and a second member 24, and accommodates therein a base portion 28 of the lock device 18. The first member 23 is formed by a thin plate, including a front wall 23a and an upper wall 23b to have an L-shaped cross section. The second member 24 is formed by a thick plate, including a rear wall 24a and a lower wall 24b to have an L-shaped cross section.

The base portion 28 is a box-shaped member with a lower face opened, including a front face 28a, a rear face 28b, an upper face 28c, and right and left side faces 28d, 28d. Paired attachment plates 28e, 28e protrude in the right-left direction from the upper face 28c, while an attachment plate 28f protrudes downward from the rear face 28b. A lower end of a hook 30 engageable with the striker 16 is pivotally supported to be swingable to the right and left by a fulcrum pin 29 provided between the front face 28a and the rear face 28b. A slit 28g extending in the front-rear direction is formed in the front face 28a, the upper face 28c, and the rear face 28b. The slit 28g allows the striker 16 to enter into the base portion 28.

An opening 23c in a square shape is formed in the upper wall 23b of the first member 23, and a first cut-out 24c and a second cut-out 24d which are mutually continuous are formed in the rear wall 24a and the lower wall 24b of the second member 24. The base portion 28 is inserted into the bulkhead 17 through the opening 23c of the upper wall 23b. The paired attachment plates 28e, 28e continuous with the upper face 28c are fastened to the upper wall 23b of the first member 23 with bolts 33, 33 and nuts 34, 34.

In the rear wall 24a of the second member 24, there are formed: two slits 24e, 24e respectively extending upward from right and left side edges of the first cut-out 24c; and a bracket 24f extending downward from an upper edge of the first cut-out 24c to below the lower wall 24b of the second member 24. The attachment plate 28f protruding downward from the rear face 28b of the base portion 28 is fastened to the bracket 24f with a bolt 35 and a nut 36. In this state, a lower half portion of the rear face 28b of the base portion 28 faces the first cut-out 24c in the rear wall 24a of the second member 24, and the opened lower face of the base portion 28 faces the second cut-out 24d in the lower wall 24b of the second member 24.

When the striker 16 provided on the lower surface of the front hood 15 is engaged with the hook 30 of the lock device 18 with the front hood 15 closed, the front hood 15 is thereby locked at a closed position. For unlocking the lock device 18, connection means such as a cable 37 connects the hook 30 and an unillustrated unlocking lever provided in a vehicle cabin.

Next, a description of operations of the embodiment of the present invention having the above-described configuration will be given.

Suppose a case where a frontal collision with an obstacle such as a pedestrian occurs on a vehicle, and a rearward collision load is inputted from the femurs and the waist to a front end of the front hood 15. In this case, as shown in FIG. 5, the front portion of the front hood 15 buckles in the front-rear direction, so that collision energy is absorbed. At this time, the striker 16 provided on the lower surface of the front portion of the front hood 15 moves rearward, and the movement is transmitted to the base portion 28 through the hook 30 of the lock device 18.

The upper wall 23b of the first member 23 of the bulkhead 17 supporting the attachment plates 28e, 28e of the upper face 28c of the base portion 28 is formed by a thin plate, and the front wall 23a, of the first member 23, continuous with the upper wall 23b is also formed of a thin plate. Thus, the upper wall 23b and the front wall 23a are easily deformed, and the base portion 28 moves downward while turning in such a manner that the lower portion of the base portion 28 turns rearward. At this time, the deformation can be accelerated while the rigidity of the upper wall 23b is reduced due to the opening 23c formed in the thin-plate upper wall 23b for inserting the base portion 28 therein.

The attachment plate 28f provided to the rear face 28b of the base portion 28 is fixed onto the bracket 24f of the rear wall 24a of the second member 24, and the bracket 24f is formed by a thick plate. Since the bracket 24f is made brittle due to the first cut-out 24c and the paired slits 24e, 24e, the rear wall 24a pushed by the rear face 28b of the base portion 28 is easily bent along a line connecting upper ends of the paired slits 24e, 24e. The rear face 28b of the base portion 28 passes through the first cut-out 24c in the rear wall 24a, and thereby the base portion 28 can turn in such a manner that the rear face 28b turns rearward.

In addition, even though the base portion 28 moves downward due to deformation of the upper wall 23b and the front wall 23a of the first member 23 and an upper portion of the rear wall 24a of the second member 24, the lower face of the base portion 28 can pass downward through the second cut-out 24d in the lower wall 24b of the second member 24. Thus, the base portion 28 can move downward without interfering with the lower wall 24b.

As described above, when a collision load is inputted from the front or the above to the front hood 15 due to a frontal collision with a pedestrian, the base portion 28 of the lock device 18 configured to lock the striker 16 of the front hood 15 can move both rearward and downward. Thus, rearward and downward impact absorption strokes can be increased to enhance the impact absorption performance.

Moreover, the magnitude of the load at which the base portion 28 of the lock device 18 moves at the collision is constant without being influenced by a bolt tightening torque, and the load can be set optionally according to the plate thickness or the shape of the first and second members 23, 24 of the bulkhead 17. Thus, the front portion of the front hood 15 is always moved rearward or downward in a stroke at an optimum load, so that the effect of absorbing the collision energy can be enhanced.

Further, when the front hood 15 is closed strongly, a downward load is inputted to the base portion 28 from the striker 16 through the hook 30. Since the attachment plate 28f of the rear face 28b of the base portion 28 is fixed onto the rear wall 24a of the thick-plate second member 24 with the bolt 35 and the nut 36, the base portion 28 can reliably receive the impact of closing the front hood 15.

An embodiment of the present invention has been described above, but various design modifications can be made without departing from the gist of the present invention.

For example, the frame member of the present invention is not limited to the bulkhead 17 in the embodiment.

In the embodiment, the first member 23 of the bulkhead 17 is formed by a thin plate, while the second member 24 is formed by a thick plate. The plate thicknesses thereof, however, are relative to each other. What is required is that the first member 23 has a smaller plate thickness than the second member 24 does.

When a collision load of a frontal collision imposed on a front hood is transmitted through a striker (16) from the front or the above to an upper portion of a lock device (18) provided inside a frame member (17), an upper wall (23b) of a thin-plate first member (23) of the frame member (17) to which a base portion (28) of the lock device (18) is fixed and a front wall (23a) continuous with the upper wall (23b) are deformed to allow the base portion (28) to move rearward and downward. Thereby, an impact absorption stroke for absorbing collision energy is ensured. At this time, if a rear face (28b) of the base portion (28) interferes with a rear wall (24a) of a thick-plate second member (24), the base portion (28) is hindered from moving rearward. However, the rear face (28b) of the base portion (28) passes through a first cut-out (24c) in the rear wall (24a), and thereby a rearward impact absorption stroke is ensured. Accordingly, it is possible to ensure an impact absorption stroke at collision of a front portion of an automobile by moving a front portion of a front hood at a desirable load.

## Claims

1. A hood lock device in which a striker (16) provided in a protruding manner downward from a front portion of a front hood (15) is locked with a lock device (18) provided inside a frame member (17) of a vehicle body, the front hood (15) openably and closably covering an engine room (14),
**characterized in that**
the frame member (17) accommodating a base portion (28) of the lock device (18) is a member having a quadrangular closed cross section formed by joining a first member (23) and a second member (24), the first member (23) being formed of a thin plate having an L-shaped cross section including a front wall (23a) and an upper wall (23b), the second member (24) being formed of a thick plate having an L-shaped cross section including a rear wall (24a) and a lower wall (24b), and
an upper face (28c) of the base portion (28) is fixed to the upper wall (23b), and a first cut-out (24c) allowing a rear face (28b) of the base portion (28) to pass therethrough is formed in the rear wall (24a) facing the rear face (28b) of the base portion (28).

2. The hood lock device according to claim 1, wherein a second cut-out (24d) allowing a lower face of the base portion (28) to pass therethrough is formed in the lower wall (24b) in such a manner as to be continuous with the first cut-out (24c), the lower wall (24b) facing the lower face of the base portion (28).

3. The hood lock device according to claim 1 or 2, wherein the rear wall (24a) comprises paired slits (24e) extending upward along right and left side faces (28d) of the base portion (28) from an upper edge of the first cut-out (24c).

4. The hood lock device according to any one of claims 1 to 3, wherein the rear face (28b) of the base portion (28) is fixed to the rear wall (24a).

5. The hood lock device according to claim 4, wherein an opening (23c) for inserting the base portion (28) therein is formed in the upper wall (23b) of the frame member (17).

## Patentansprüche

1. Haubenverriegelungseinrichtung, in welcher ein Verriegelungsstück (16), welches in einer vorstehenden Weise abwärts von einem vorderen Abschnitt von einer Fronthaube (15) vorgesehen ist, mit einer Verriegelungseinrichtung (18) verriegelt ist, welche innerhalb eines Rahmenelements (17) von einem Fahrzeugkörper vorgesehen ist, wobei die Fronthaube (15) einen Motorraum (14) öffenbar und schließbar abdeckt,
**dadurch gekennzeichnet,**
**dass** das Rahmenelement (17), welches einen Basisabschnitt (28) von der Verriegelungseinrichtung (18) aufnimmt, ein Element ist, welches einen viereckigen geschlossenen Querschnitt hat, welches ausgebildet ist, indem ein erstes Element (23) und ein zweites Element (24) verbunden werden, wobei das erste Element (23) aus einer dünnen Platte mit einem L-förmigen Querschnitt ausgebildet ist, umfassend eine vordere Wand (23a) und eine obere Wand (23b), wobei das zweite Element (24) aus einer dicken Platte mit einem L-förmigen Querschnitt ausgebildet ist, umfassend eine hintere Wand (24a) und eine untere Wand (24b), und
**dass** eine obere Fläche (28c) von dem Basisabschnitt (28) an der oberen Wand (23b) fixiert ist, und ein erster Ausschnitt (24c), welcher einer hinteren Fläche (28b) von dem Basisabschnitt (28) ermöglicht, hindurch zu passieren, in der hinteren Wand (24a) ausgebildet ist, welche zu der hinteren Fläche (28b) von dem Basisabschnitt (28) weist.

2. Haubenverriegelungseinrichtung nach Anspruch 1, wobei ein zweiter Ausschnitt (24d), welcher es einer unteren Fläche von dem Basisabschnitt (28) ermöglicht, hindurch zu passieren, in der unteren Wand (24b) in einer derartigen Weise ausgebildet ist, dass er mit dem ersten Ausschnitt (24c) kontinuierlich ist, wobei die untere Wand (24b) zu der unteren Fläche von dem Basisabschnitt (28) weist.

3. Haubenverriegelungseinrichtung nach Anspruch 1 oder 2, wobei die hintere Wand (24a) paarweise vorgesehene Schlitze (24e) umfasst, welche sich entlang rechten und linken Seitenflächen (28d) von dem Basisabschnitt (28) von einem oberen Rand von dem ersten Ausschnitt (24c) aufwärts erstrecken.

4. Haubenverriegelungseinrichtung nach einem der Ansprüche 1 bis 3, wobei die hintere Fläche (28b) von dem Basisabschnitt (28) an der hinteren Wand (24a) fixiert ist.

5. Haubenverriegelungseinrichtung nach Anspruch 4, wobei eine Öffnung (23c) zum Einsetzen des Basisabschnitts (28) darin in der oberen Wand (23b) von dem Rahmenelement (17) ausgebildet ist.

## Revendications

1. Dispositif de verrouillage pour capot dans lequel un heurtoir (16) prévu en saillie vers le bas à partir d'une partie avant d'un capot avant (15) est verrouillé avec un dispositif de verrouillage (18) prévu à l'intérieur d'un élément de châssis (17) d'une carrosserie de véhicule, le capot avant (15) couvrant, en pouvant s'ouvrir et se fermer, un compartiment moteur (14), **caractérisé en ce que** l'élément de châssis (17) recevant une partie de base (28) du dispositif de verrouillage (18) est un élément présentant une section transversale fermée quadrangulaire formée en joignant un premier élément (23) et un deuxième élément (24), le premier élément (23) étant formé par une plaque mince ayant une section transversale en forme de L comprenant une paroi antérieure (23a) et une paroi supérieure (23b), le deuxième élément (24) étant formé par une plaque épaisse ayant une section transversale en forme de L comprenant une paroi postérieure (24a) et une paroi inférieure (24b), et **en ce qu'**une face supérieure (28c) de la partie de base (28) est fixée à la paroi supérieure (23b) et une première découpe (24c), permettant qu'une face postérieure (28b) de la partie de base (28) passe à travers celle-ci, est formée dans la paroi postérieure (24a) faisant face à la face postérieure (28b) de la partie de base (28).

2. Dispositif de verrouillage pour capot selon la revendication 1, dans lequel une deuxième découpe (24d), permettant qu'une face inférieure de la partie de base (28) passe à travers celle-ci, est formée dans la paroi inférieure (24b) de façon à être continue avec la première découpe (24c), la paroi inférieure (24b) faisant face à la face inférieure de la partie de base (28).

3. Dispositif de verrouillage pour capot selon la revendication 1 ou 2, dans lequel la paroi arrière (24a) comporte des fentes associées en une paire (24e), qui s'étendent vers le haut le long de faces latérales gauche et droite (28d) de la partie de base (28) à partir d'un bord supérieur de la première découpe (24c).

4. Dispositif de verrouillage pour capot selon l'une quelconque des revendications 1 à 3, dans lequel la face postérieure (28b) de la partie de base (28) est fixée à la paroi postérieure (24a).

5. Dispositif de verrouillage pour capot selon la revendication 4, dans lequel une ouverture (23c), destinée à y insérer la partie de base (28), est formée dans la paroi supérieure (23b) de l'élément de châssis (17).
